# EUROPEAN PATENT APPLICATION

(11) **EP 4 793 729 A2**
(43) Date of publication of application: **19.08.2026**
(21) Application number: 26180340.7
(22) Date of filing: 30.08.2023
(51) Int. Cl.: G05D 1/00

(54) **METHOD FOR SELECTING DIRECTION, MOWER, ELECTRONIC EQUIPMENT, AND STORAGE MEDIUM**

(30) Priority: 06.03.2023 CN 202310213022
(62) Document number(s) of the earlier application(s) in accordance with Art. 76 EPC: 23194308.5 / 4 427 570
(71) Applicant: Willand (Beijing) Technology Co., Ltd., Beijing 100192 (CN)
(72) Inventor: CHEN, Zichong, BEIJING, 100192 (CN); LV, Zhuo, BEIJING, 100192 (CN)
(74) Representative: Regimbeau

(57) **Abstract**

Embodiments of the disclosure provide a method for selecting a direction, a mower, an electronic equipment and a storage medium. With the method, a boundary of a target region is identified via a mower. If a distance between the mower and the boundary is determined to be within a first preset range according to the boundary as identified, the mower is controlled to move along the boundary in a movement direction. The movement direction is either a leftward direction along the boundary or a rightward direction along the boundary, which direction has a less angle with respect to an orientation of a head of the mower. With a solution provided in the embodiments, the angle between the leftward direction along the boundary and a current orientation of the head of the mower, as well as the angle between the rightward direction along the boundary and the current orientation of the head of the mower, may be computed. The direction corresponding to the less one of the two angles may be determined as the movement direction in which the mower is to move along the boundary of the target region, thereby decreasing the turning angle by which the mower turns, improving efficiency of movement.

## Description

### TECHNICAL FIELD

The disclosure relates to the field of mowers, and particularly to, a method for selecting a direction, a mower, an electronic equipment, and a storage medium.

### BACKGROUND

In general, burial cable installation may be performed at the boundary of a lawn to delineate the boundary of mowing. A mower may determine whether it has reached the boundary by perceiving a buried cable. However, both the equipment cost and the labor cost of the burial cable installation are high.

To lower the costs, satellite navigation and positioning may be adopted for some mowers. A positioning device may be installed on a mower. Before mowing, the mower circles the lawn once along the boundary of the lawn under the control of a user or automatically. Coordinate data of movement of the mower may be recorded via satellite navigation and positioning, forming the boundary of mowing. Similarly, coordinate data of an obstacle or a passage may also be recorded, thereby completing mapping a mowing region.

Specifically in mapping, the mower is to be controlled to first move to a certain location at the boundary of the lawn, and starting from the location, move along the boundary of the lawn automatically after identifying the boundary of a target region of the lawn. However, after the mower has reached the location, the direction in which the mower is to move along the boundary cannot be controlled, and the mower can just move according to a preset solution, resulting in poor mapping quality.

In view of this, there is a pressing need for a solution that allows convenient and quick selection of a movement direction.

### SUMMARY

In view of this, embodiments of the disclosure provide a solution for selecting a direction, capable of solving at least some of the problems as described.

According to an aspect of the disclosure, a method for selecting a direction is provided. The method includes: identifying a boundary of a target region via a mower; and in response to determining according to the boundary as identified that a distance between the mower and the boundary is within a first preset range, controlling the mower to move in a movement direction. The movement direction is either a leftward direction along the boundary or a rightward direction along the boundary, which direction has a less angle with respect to an orientation of a head of the mower.

According to another aspect of the disclosure, a method for selecting a direction is provided. The method includes: identifying a boundary of a target region via a mower; comparing a first distance between a right movement component of the mower and the boundary to a second distance between a left movement component of the mower and the boundary; in response to the first distance being greater than the second distance, controlling the mower to move to the right along the boundary; and in response to the first distance being less than the second distance, controlling the mower to move to the left along the boundary.

According to another aspect of the disclosure, a mower is provided. The mower includes: a body; a movement component provided on the body; a boundary identifying component provided on the body, configured to identify a boundary of a target region; a positioning component provided on the body, configured to sense pose data of the mower to determine an orientation of a head of the mower; and a controlling component provided on the body, configured to, in response to determining according to the boundary as identified that a distance between the mower and the boundary is within a first preset range, control the mower to move in a movement direction. The movement direction is either a leftward direction along the boundary or a rightward direction along the boundary, which direction has a less angle with respect to the orientation of the head of the mower.

According to another aspect of the disclosure, a mower is provided. The mower includes: a body; a left movement component provided at a left side of the body; a right movement component provided at a right side of the body; positioning components provided respectively on the left movement component and the right movement component, configured to sense location data of the left movement component and the right movement component, respectively; a boundary identifying component provided on the body, configured to identify a boundary of a target region to determine location data of the boundary; and a controlling component provided on the body, configured to compare a first distance between the right movement component of the mower and the boundary to a second distance between the left movement component of the mower and the boundary; in response to the first distance being greater than the second distance, control the mower to move to the right along the boundary; and in response to the first distance being less than the second distance, control the mower to move to the left along the boundary.

According to an aspect of the disclosure, a method for selecting a direction is provided. The method includes: receiving a boundary of a target region sent by a mower; displaying the boundary of the target region via an interface; acquiring, via the interface, a direction determining instruction input by a user, the direction determining instruction indicating a movement direction in which the mower is to move along the boundary of the target region, the movement direction being a leftward direction along the boundary or a rightward direction along the boundary; and sending the movement direction to the mower.

According to another aspect of the disclosure, a method for selecting a direction is provided. The method includes: during movement of a mower, identifying a boundary of a target region, and sending the boundary of the target region as identified, to allow displaying the boundary of the target region to a user and acquiring a direction determining instruction input by the user, the direction determining instruction indicating a movement direction in which the mower is to move along the boundary of the target region, the movement direction being a leftward direction along the boundary or a rightward direction along the boundary; and receiving the movement direction.

According to another aspect of the disclosure, a device for selecting a movement direction is provided. The device includes: a boundary acquiring module configured to receive a boundary of a target region sent by a mower; a displaying module configured to display the boundary of the target region via an interface; an instruction determining module configured to acquire, via the interface, a direction determining instruction input by a user, the direction determining instruction indicating a movement direction in which the mower is to move along the boundary of the target region, the movement direction being a leftward direction along the boundary or a rightward direction along the boundary; and a sending module configured to send the movement direction to the mower.

According to another aspect of the disclosure, a mower is provided. The mower includes a controller. The controller is configured to implement: during movement of a mower, identifying a boundary of a target region, and sending the boundary of the target region as identified, to allow displaying the boundary of the target region to a user and acquiring a direction determining instruction input by the user, the direction determining instruction indicating a movement direction in which the mower is to move along the boundary of the target region, the movement direction being a leftward direction along the boundary or a rightward direction along the boundary; and receiving the movement direction.

According to another aspect of the disclosure, a terminal for controlling a mower is provided. The terminal includes a communicating device and a displaying device. The communicating device is configured to receive a boundary of a target region sent by a mower, and send a movement direction to the mower. The displaying device is configured to display the boundary of the target region via an interface, and acquire, via the interface, a direction determining instruction input by a user. The direction determining instruction is configured to indicate the movement direction in which the mower is to move along the boundary of the target region. The movement direction is a leftward direction along the boundary or a rightward direction along the boundary.

According to another aspect of the disclosure, an electronic equipment is provided. The electronic equipment includes a processor and a memory storing a program. The program includes an instruction which, when executed by the processor, causes the processor to implement the method of an aforementioned aspect.

According to another aspect of the disclosure, a non-transitory computer-readable storage medium storing thereon a computer instruction is provided. The computer instruction is configured to cause a computer to implement the method of an aforementioned aspect.

With a solution provided in embodiments of the disclosure, the angle between the leftward direction along the boundary and the current orientation of the head of the mower, as well as the angle between the rightward direction along the boundary and the current orientation of the head of the mower, may be computed. The direction corresponding to the less one of the two angles may be determined as the movement direction in which the mower is to move along the boundary of the target region, thereby decreasing the turning angle by which the mower turns, improving efficiency of movement.

### BRIEF DESCRIPTION OF THE DRAWINGS

More details, characteristics, and advantages of the disclosure are disclosed below in description of exemplary embodiments with reference to the drawings. Among the drawings:
FIG. 1A is a flowchart of a method for selecting a direction according to an exemplary embodiment of the disclosure.
FIG. 1B is a diagram of a prompt box of prompt information prompting a user to determine a direction according to the disclosure.
FIG. 2A is a flowchart of another method for selecting a direction according to an exemplary embodiment of the disclosure.
FIG. 2B is a diagram illustrating the principle of the method for selecting a movement direction according to FIG. 2A.
FIG. 2C is a diagram of a prompt box of prompt information prompting a user to determine a direction according to the disclosure.
FIG. 3 is a block diagram of a structure of a mower according to an exemplary embodiment of the disclosure.
FIG. 4 is a block diagram of a structure of another mower according to an exemplary embodiment of the disclosure.
FIG. 5 is a flowchart of a method for selecting a direction according to an exemplary embodiment of the disclosure.
FIG. 6A is a diagram of an interface for displaying a mower and a boundary as identified by the mower according to the disclosure.
FIG. 6B is a diagram of a prompt box of prompt information prompting a user to select a movement direction according to the disclosure.
FIG. 6C is a diagram of a prompt box of prompt information prompting a user to determine a direction according to the disclosure.
FIG. 6D is a diagram of a principle of selecting a movement direction according to the disclosure.
FIG. 7 is a flowchart of a mapping method according to the disclosure.
FIG. 8 is a block diagram of a structure of a device for selecting a movement direction according to an exemplary embodiment of the disclosure.
FIG. 9 is a block diagram of a structure of a mapping device according to an exemplary embodiment of the disclosure.
FIG. 10 is a diagram of architecture of an electronic equipment according to an exemplary embodiment of the disclosure.

### DETAILED DESCRIPTION

Embodiments of the disclosure will be elaborated below with reference to the drawings. Note that although some embodiments of the disclosure are shown in the drawings, the disclosure may be implemented in various forms without being limited by embodiments illustrated herein. Rather, the embodiments are provided to allow a thorough understanding of the disclosure. Note that drawings and embodiments of the disclosure are merely for purpose of illustration, rather than limiting the scope of the disclosure.

Understandably, respective steps recorded in a method embodiment of the disclosure may be implemented in different orders and/or in parallel. In addition, a method embodiment may include an additional step and/or skip implementing a shown step. The scope of the disclosure is not limited in this aspect.

A phrase "including/comprising" used herein and a variant thereof may be an open "including/comprising", i.e., "including but not limited to". A phrase "based on" refers to "based at least partly on". A phrase "an embodiment" means "at least one embodiment". A phrase "another embodiment" means "at least one other embodiment". A phrase "some embodiments" means "at least some embodiments". The definition of any other phrase is given below. Note that a concept such as "first", "second", etc., mentioned in the disclosure is just for distinguishing different devices, modules, or units, rather than limiting the order in which functions are implemented by the devices, modules, or units, or interdependence among the devices, modules, or units.

Note that a modifier "a/an" or "multiple" mentioned in the disclosure is illustrative rather than limiting, and should be construed as "one or more" as may be understood by a person having ordinary skill in the art, unless explicitly specified otherwise by the context. A name of a message or information exchanged among multiple devices in embodiments of the disclosure is just for purpose of illustration, rather than limiting the scope of the message or information.

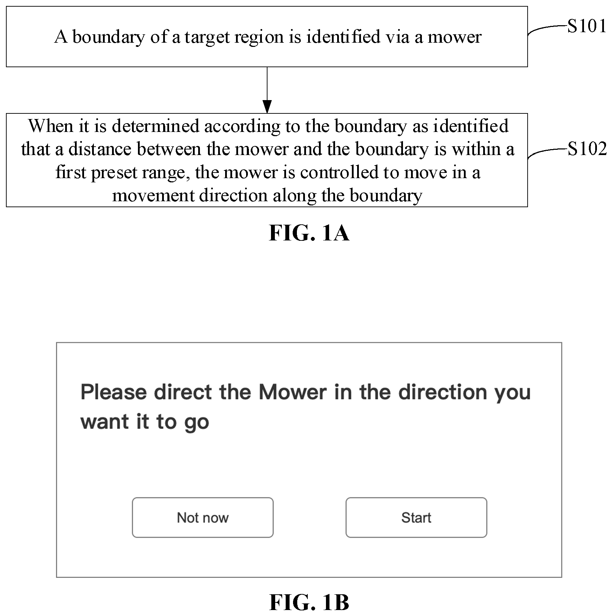

FIG. 1A is a flowchart of a method for selecting a movement direction according to an exemplary embodiment of the disclosure. The method according to the embodiment may apply to a mower or to a terminal equipment controlling the mower. The method includes steps as follows.

At S101, a boundary of a target region is identified via a mower.

In the embodiment, the mower may include a boundary identifying component, such as a camera or a scanner, etc.

The target region may be any region for which determination of the boundary is needed, such as the region where the lawn is located or an obstacle the mower is to bypass in mowing, etc., which is not limited by the embodiment.

In general, there may be a boundary between the target region and a non-target region. For example, there is a grassy-grassless boundary line between the lawn and a non-lawn, a clear boundary line between an obstacle and the lawn, etc.

An image collecting device may be installed on the mower. The image collecting device may be configured to collect an image around the mower. The mower may include a processor. The processor may perform boundary identification on an image collected, thereby acquiring the location of the boundary of a target region in the image, thus acquiring the location of the boundary of the target region relative to the mower.

The boundary of the target region may specifically be a number of discrete points on the boundary as identified. Coordinates of a discrete point may be coordinates in a mower coordinate system. Of course, in another implementation of the disclosure, a boundary may also be denoted in another mode, such as to be a boundary line recorded in a vector mode, satellite positioning coordinates corresponding to discrete points, etc., which is not limited by the embodiment.

The mower may be moved by a user in an actual scene, such as a courtyard. Images may be collected continuously in the movement. It may be identified whether there is a boundary in an image collected. Once identified, a boundary of a target region as identified may be sent.

At S102, if it is determined according to the boundary as identified that a distance between the mower and the boundary is within a first preset range, the mower is controlled to move along the boundary in a movement direction. The movement direction is either a leftward direction along the boundary or a rightward direction along the boundary, which direction has a less angle with respect to an orientation of a head of the mower.

In the embodiment, the mower per se may collect pose data. The pose data may include location data and bearing data of the mower. The location data may be the location of the mower. The bearing data may be the orientation of the head of the mower.

If it is determined according to the boundary as identified that a distance between the mower and the boundary is within a first preset range, it shows that the mower is close enough to the boundary. In this case, the mower is to be controlled to move along the boundary. Therefore, if the distance between the mower and the boundary is within the first preset range, one of the leftward direction along the boundary or the rightward direction along the boundary may be selected as the movement direction.

Specifically, moving in the leftward direction along the boundary may be advancing based on the orientation of the head of the mower, and when reaching the boundary, turning left and continuing to move along the boundary. Moving in the rightward direction along the boundary may be advancing based on the orientation of the head of the mower, and when reaching the boundary, turning right and continuing to move along the boundary.

In the embodiment, the angle between the leftward direction along the boundary and the orientation of the head of the mower, as well as the angle between the rightward direction along the boundary and the orientation of the head of the mower, may be computed. The direction corresponding to the less one of the two angles may be selected as the movement direction in which the mower is to move along the boundary.

In the embodiment, the boundary may specifically be an external entity boundary or an internal entity boundary. A value of the first preset range corresponding to the external entity boundary may differ from a value of the first preset range corresponding to the internal entity boundary.

The external entity boundary may be the external boundary of the lawn. The internal entity boundary may be the boundary of an obstacle in the lawn. The external entity boundary and the internal entity boundary correspond to different entities, and therefore have to be mapped differently. Therefore, the value of the first preset range corresponding to the external entity boundary may differ from the value of the first preset range corresponding to the internal entity boundary. The first preset range corresponding to the external entity boundary may be greater than the first preset range corresponding to the internal entity boundary.

Optionally, in the embodiment, the step that if it is determined according to the boundary as identified that the distance between the mower and the boundary is within the first preset range, the mower is controlled to move in the movement direction, as follows. If it is determined according to the boundary as identified that the distance between the mower and the boundary is within the first preset range, the boundary as identified is sent, so as to display the boundary of the target region to a user. A location adjusting operation or a location determining operation is received via an interface. In response to the location adjusting operation, the orientation of the head of the mower may be adjusted via the mower. Alternatively, in response to the location determining operation, the leftward direction along the boundary or the rightward direction along the boundary, which direction has a less angle with respect to a current orientation of the head of the mower, is determined as the movement direction via the mower. The mower is controlled to move along the boundary in the movement direction.

In the embodiment, if it is determined according to the boundary as identified that the distance between the mower and the boundary is within the first preset range, it means that the mower needs to start to move along the boundary. In this case, the boundary as identified may be sent, thereby displaying the boundary as identified to the user. Similarly, the movement direction may be a direction along the boundary that corresponds to the current orientation of the head of the mower.

The user may input the location adjusting operation or the location determining operation according to prompt information.

Exemplarily, likewise, FIG. 1B shows prompt information configured to prompt a user to determine a direction. The prompt information may specifically include "please direct the mower in the direction you want it to go". The user may trigger "not now" in the interface to return to the last interface, and input a location adjusting operation via a button in the last interface that is configured to control the direction of the mower, or trigger "start" in the interface to input a location determining operation.

Specifically, if receiving the location adjusting operation, the terminal equipment may send the location adjusting operation to the mower, to have the mower adjust the orientation of the head of the mower in response to the location adjusting operation. The mower may again send the boundary of the target region as identified, to allow updating the boundary of the target region displayed to the user, as well as the relation of location of the boundary with the mower.

In addition, if the user triggers "not now" and returns to the last interface, the interface may also include a trigger button configured for inputting the location determining operation. After adjusting the direction of the mower, the user may trigger the button to input the location determining operation.

After the location determining operation has been input, in response to the location determining operation, the mower determines the leftward direction along the boundary or the rightward direction along the boundary, which direction has a less angle with respect to a current orientation of the head of the mower, as the movement direction. The mower is controlled to move along the boundary in the movement direction.

In the embodiment, the angle between the leftward direction along the boundary and the current orientation of the head of the mower, as well as the angle between the rightward direction along the boundary and the current orientation of the head of the mower, may be computed. The direction corresponding to the less one of the two angles may be determined as the movement direction in which the mower is to move along the boundary of the target region, thereby decreasing the turning angle by which the mower turns, improving efficiency of movement.

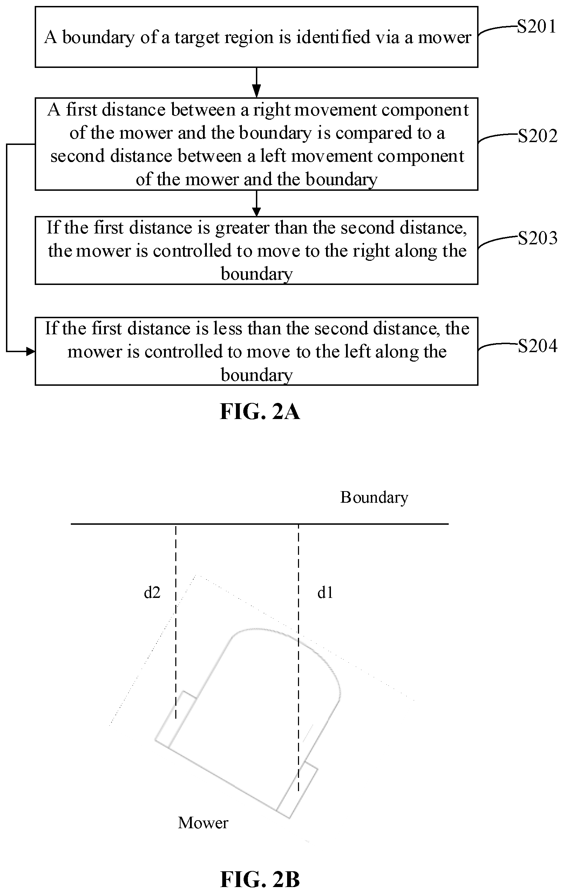

FIG. 2A is a flowchart of a method for selecting a movement direction according to an exemplary embodiment of the disclosure. The embodiment differs from the above embodiment in that in the embodiment, the mower per se may determine to select a movement direction according to respective locations of a left movement component and a right movement component relative to the boundary. The method according to the embodiment may apply to a mower or to a terminal equipment controlling the mower. The method includes steps as follows.

At S201, a boundary of a target region is identified via a mower.

In the embodiment, the mower may include a boundary identifying component, such as a camera or a scanner, etc. Refer to the embodiments as described for a specific method for identifying a boundary, which is not repeated here.

At S202, a first distance between a right movement component of the mower and the boundary is compared to a second distance between a left movement component of the mower and the boundary.

S203 or S204 may be implemented according to the result of the comparison.

In the embodiment, the left movement component of the mower refers to the movement component located at the left half of the mower, taking the orientation of the head of the mower as a frontal reference. The right movement component of the mower refers to the movement component located at the right half of the mower, taking the orientation of the head of the mower as the frontal reference. Similarly, directions hereinafter are also determined by taking the orientation of the head of the mower as a reference. Moving to the left along the boundary may be advancing based on the orientation of the head of the mower, and when reaching the boundary, turning left and continuing to move along the boundary. Moving to the right along the boundary may be advancing based on the orientation of the head of the mower, and when reaching the boundary, turning right and continuing to move along the boundary.

The mower may compute the first distance between the right movement component and the boundary and the second distance between the left movement component and the boundary, and compare sizes of the first distance and the second distance.

Note that in general a left movement component and a right movement component may appear in pairs, such as a set of front wheels and a set of rear wheels included in the mower. The left movement component may be the left front wheel, and the right movement component may be the right front wheel. Alternatively, the left movement component may be the left rear wheel, and the right movement component may be the right rear wheel. Alternatively, the left movement component may be the left front wheel and the left rear wheel, where the location information may be the location of the center of the left front wheel and the left rear wheel; and the right movement component may be the right front wheel and the right rear wheel, where the location information may be the location of the center of the right front wheel and the right rear wheel.

The left movement component and the right movement component may preferably be driving wheels.

At S203, if the first distance is greater than the second distance, the mower is controlled to move to the right along the boundary.

At S204, if the first distance is less than the second distance, the mower is controlled to move to the left along the boundary.

Specifically, the first distance is compared to the second distance. The leftward direction along the boundary or the rightward direction along the boundary may be selected, according to the result of the comparison, as the movement direction in which the mower is to move along the boundary of the target region, thereby decreasing the turning angle by which the mower turns, improving efficiency of movement.

Referring to FIG. 2B, it shows that the mower includes a left movement component and a right movement component. The right movement component is at a first distance d1 to the boundary. The left movement component is at a second distance d2 to the boundary. The first distance d1 shown in FIG. 2B is greater than the second distance d2. Then, the mower may advance according to the orientation of the head of the mower, turn right, and move to the right along the boundary.

Optionally, in the embodiment, after S201, the method further includes steps as follows. If it is determined according to the boundary as identified that a distance between the mower and the boundary is within a first preset range, the boundary as identified is sent so as to display the boundary of the target region to a user. A location adjusting operation or a location determining operation is received via an interface. In response to the location adjusting operation, the mower adjusts the distance between at least one of the left movement component or the right movement component of the mower and the boundary. Alternatively, in response to the location determining operation, the mower proceeds to S202.

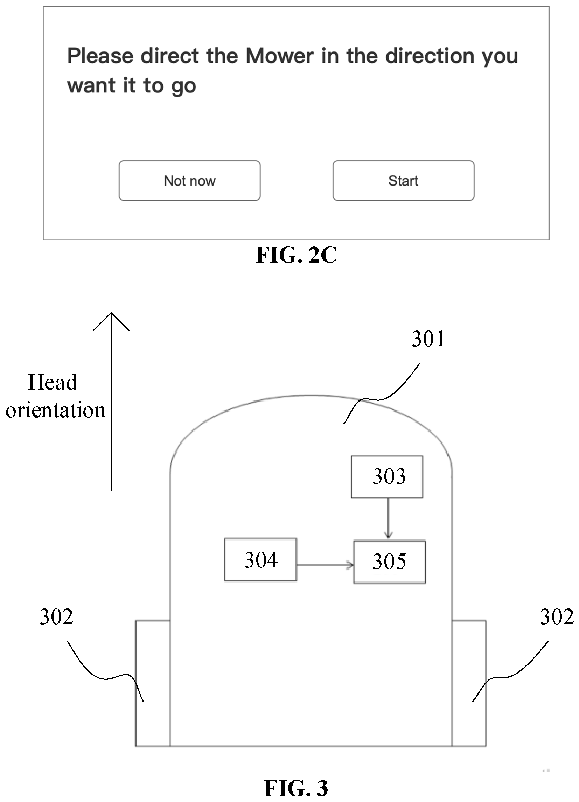

Exemplarily, FIG. 2C shows prompt information configured to prompt a user to determine a direction. The prompt information may specifically include "please direct the mower in the direction you want it to go". The user may trigger "not now" in the interface to return to the last interface, and input a location adjusting operation via a button in the last interface that is configured to control the direction of the mower, or trigger "start" in the interface to input a location determining operation.

Specifically, if receiving the location adjusting operation, the terminal equipment may send the location adjusting operation to the mower, to have the mower adjust the orientation of the head of the mower in response to the location adjusting operation. The mower may again send the boundary of the target region as identified, to allow updating the boundary of the target region displayed to the user, as well as the relation of location of the boundary with the mower.

In addition, if the user triggers "not now" and returns to the last interface, the interface may also include a trigger button configured for inputting the location determining operation. Having adjusted the direction of the mower, the user may trigger the button to input the location determining operation.

After the location determining operation has been input, in response to the location determining operation, the mower proceeds to S202. By comparing the first distance to the second distance, the mower determines the leftward direction along the boundary or the rightward direction along the boundary as the movement direction in which the mower is to move along the boundary of the target region.

In the embodiment, the mower compares the distance between the left movement component and the boundary to the distance between the right movement component and the boundary, and determines, according to the result of the comparison, the leftward direction along the boundary or the rightward direction along the boundary as the movement direction in which the mower is to move along the boundary of the target region, thereby decreasing the turning angle by which the mower turns, improving efficiency of movement.

FIG. 3 is a block diagram of a structure of a mower according to an exemplary embodiment of the disclosure. The mower includes a body 301, a movement component 302, a boundary identifying component 303, a positioning component 304, and a controlling component 305.

The mower includes the body 301. The movement component 302 is provided on the body 301.

The boundary identifying component 303 is provided on the body 301, and is configured to identify a boundary of a target region.

The positioning component 304 is provided on the body 301. The positioning component 304 is configured to sense pose data of the mower to determine an orientation of a head of the mower.

The controlling component 305 is provided on the body 301. The controlling component is configured to, in response to determining according to the boundary as identified that a distance between the mower and the boundary is within a first preset range, control the mower to move in a movement direction. The movement direction is either a leftward direction along the boundary or a rightward direction along the boundary, which direction has a less angle with respect to the orientation of the head of the mower.

Refer to the embodiments as described for a specific implementation of an equipment or component in the embodiment, which is not repeated here.

In the embodiment, a mower may compute the angle between the leftward direction along the boundary and the current orientation of the head of the mower, as well as the angle between the rightward direction along the boundary and the current orientation of the head of the mower. The mower may determine the direction corresponding to the less one of the two angles as the movement direction in which the mower is to move along the boundary of the target region, thereby decreasing the turning angle by which the mower turns, improving efficiency of movement.

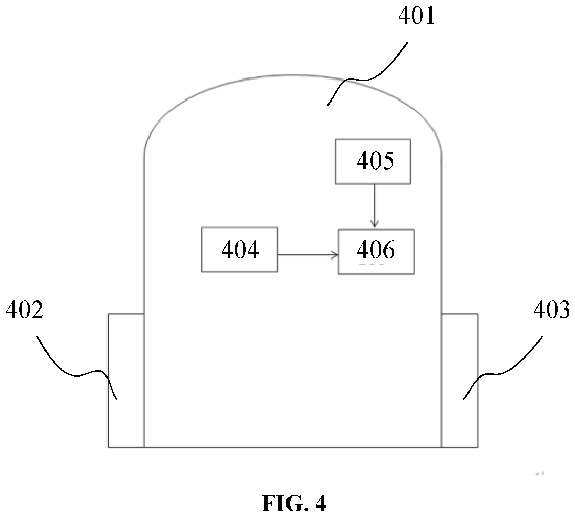

FIG. 4 is a block diagram of a structure of a mower according to an exemplary embodiment of the disclosure. The mower includes a body 401, a left movement component 402, a right movement component 403, positioning components 404, a boundary identifying component 405, and a controlling component 406.

The mower includes the body 401. The left movement component 402 is provided at a left side of the body.

The right movement component 403 is provided at a right side of the body.

The positioning components 404 are provided respectively on the left movement component and the right movement component, and are configured to sense location data of the left movement component and the right movement component, respectively.

The number of the positioning components may be a multiple of the number of the left movement component and the right movement component, which is not limited by the embodiment.

The boundary identifying component 405 is provided on the body 401, and is configured to identify a boundary of a target region to determine location data of the boundary.

The controlling component 406 is provided on the body 401, and is configured to compare a first distance between the right movement component of the mower and the boundary to a second distance between the left movement component of the mower and the boundary; in response to the first distance being greater than the second distance, control the mower to move to the right along the boundary; and in response to the first distance being less than the second distance, control the mower to move to the left along the boundary.

Refer to the embodiments as described for a specific implementation of an equipment or component in the embodiment, which is not repeated here.

In the embodiment, the mower compares the distance between the left movement component and the boundary to the distance between the right movement component and the boundary, and determines, according to the result of the comparison, the leftward direction along the boundary or the rightward direction along the boundary as the movement direction in which the mower is to move along the boundary of the target region, thereby decreasing the turning angle by which the mower turns, improving efficiency of movement.

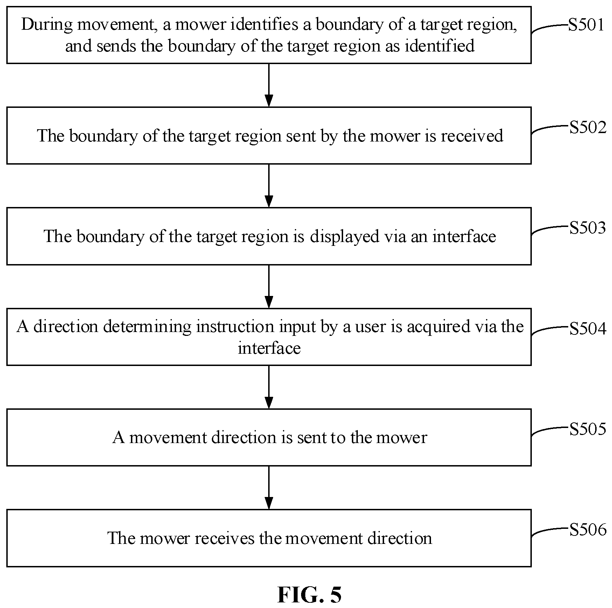

FIG. 5 is a processing flow according to an exemplary embodiment of the disclosure. Note that S501 and S506 are implemented by a mower. S502 to S505 are implemented by a terminal equipment communicating with the mower. As shown in FIG. 5, the embodiment mainly includes steps as follows.

At S501, during movement, a mower identifies a boundary of a target region, and sends the boundary of the target region as identified.

The target region may be any region for which determination of the boundary is needed, such as the region where the lawn is located or an obstacle the mower is to bypass in mowing, etc., which is not limited by the embodiment.

In general, there may be a boundary between the target region and a non-target region. For example, there is a grassy-grassless boundary line between the lawn and a non-lawn, a clear boundary line between an obstacle and the lawn, etc.

An image collecting device may be installed on the mower. The image collecting device may be configured to collect an image around the mower. The mower may include a processor. The processor may perform boundary identification on an image collected, thereby acquiring the location of the boundary of a target region in the image, thus acquiring the location of the boundary of the target region relative to the mower.

The boundary of the target region may specifically be a number of discrete points on the boundary as identified. Coordinates of a discrete point may be coordinates in a mower coordinate system. Of course, in another implementation of the disclosure, a boundary may also be denoted in another mode, such as to be a boundary line recorded in a vector mode, satellite positioning coordinates corresponding to discrete points, etc., which is not limited by the embodiment.

The mower may be moved by a user in an actual scene, such as a courtyard. Images may be collected continuously in the movement. It may be identified whether there is a boundary in an image collected. Once identified, a boundary of a target region may be sent.

At S502, the boundary of the target region sent by the mower is received.

At S503, the boundary of the target region is displayed via an interface.

Specifically, an icon that identifies a mower may be displayed in the interface. A boundary may be displayed in the interface according to the relation of location between the mower and the boundary, to allow a clear understanding of the location of the boundary relative to the mower by a user.

Having received the boundary of the target region, if location information of the boundary is represented via the mower coordinate system, the relation of location between the mower and the boundary may be determined directly and plotted. If the location of the boundary is denoted by satellite positioning coordinates, the boundary and the mower may be plotted on a map according to satellite positioning coordinates of the mower and satellite positioning coordinates of the boundary, to display the location of the boundary relative to the mower.

At S504, a direction determining instruction input by a user is acquired via the interface.

The direction determining instruction indicates a movement direction in which the mower is to move along the boundary of the target region. The movement direction is a leftward direction along the boundary or a rightward direction along the boundary.

Having learned the location of the boundary relative to the mower via the interface, the user may input a direction determining instruction according to the information learned.

The direction determining instruction is configured to indicate a movement direction in which the mower is to move along the boundary of the target region. The movement direction is specifically a leftward direction along the boundary or a rightward direction along the boundary. Specifically, if the movement direction is the leftward direction along the boundary, the mower moves along the boundary counterclockwise. If the movement direction is the rightward direction along the boundary, the mower moves along the boundary clockwise.

Specifically, the user may input a direction determining instruction further with reference to other information such as the environment of the mower, etc. For example, if there are a lot of obstacles such as wood, etc., then the user may input a direction determining instruction instructing the mower to move to the right along the boundary.

At S505, the movement direction is sent to the mower.

At S506, the mower receives the movement direction.

Having received the movement direction, the mower may move along the boundary in the movement direction.

Note that the solution according to the embodiment may apply to a mapping process. That is, in plotting the range of the target region, the mower may first be controlled to move near the boundary of the target region, and it may be selected as described for the mower to move along the boundary in the leftward direction along the boundary or the rightward direction along the boundary. Then, the boundary of a target region as needed may be determined according to location information corresponding to the movement of the mower.

In addition, the solution provided by the embodiment may apply to a mowing process. For example, a mower moves to a target region starting from a charging pile automatically. After the mower has moved near the boundary of the target region, it may be selected as described for the mower to move in the leftward direction along the boundary or in the rightward direction along the boundary. The mower may start mowing after it has moved to a location where a mowing condition is met.

With the solution provided by the embodiment, the boundary of a target region is identified and sent during movement of a mower, such that the terminal equipment corresponding to the mower receives the boundary of the target region sent by the mower; displays the boundary of the target region via an interface; and acquires, via the interface, a direction determining instruction input by a user. The direction determining instruction indicates the movement direction in which the mower is to move along the boundary of the target region. The movement direction is the leftward direction along the boundary or the rightward direction along the boundary. The terminal equipment sends the movement direction to the mower, thereby allowing the user to control the mower to move along the boundary in the leftward direction along the boundary or the rightward direction along the boundary, and select, according to the learned location of the boundary relative to the mower, one of the two directions that facilitates mapping. A selected direction may facilitate movement of the mower, or be the direction in which there is fewer obstacles, etc., thereby improving mapping efficiency and quality.

Optionally, in an implementation of the embodiment, the direction determining instruction is specifically a direction selecting operation. In S503, the boundary of the target region and prompt information prompting the user to select the movement direction may be displayed by the interface to the user. Correspondingly, in S504, a direction selecting operation input by the user according to the prompt information may be received via the interface. The direction selecting operation may be configured to indicate that the movement direction selected by the user is the leftward direction along the boundary or the rightward direction along the boundary.

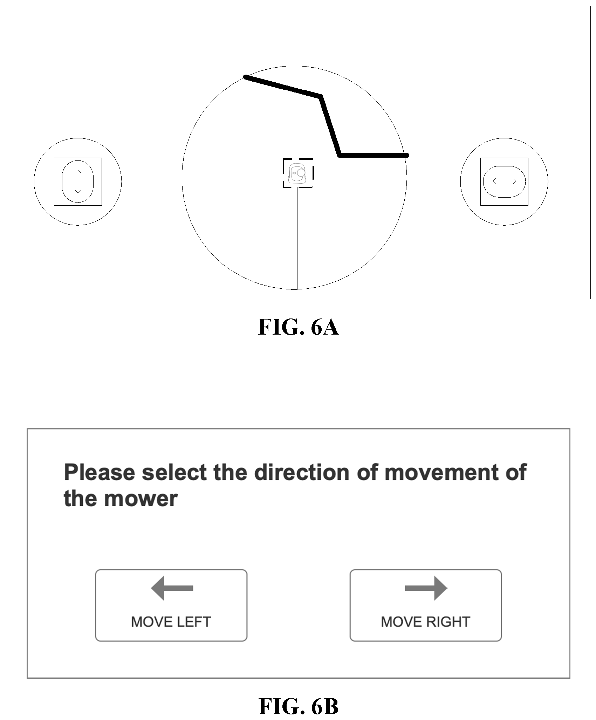

Specifically, the embodiment allows the user to control continuous movement of the mower via the terminal equipment, and updates the current location of the mower in real time in the interface of the terminal equipment. When identifying a boundary in movement, the mower sends the boundary to the terminal equipment, such that the mower and the boundary as identified by the mower are displayed in the terminal equipment. An interface displaying a mower and a boundary as identified by the mower is as shown in FIG. 6A. The mower may be identified by a mower icon in the interface. An identified boundary may be plotted around the mower. The boundary may be as shown by the thick line in FIG. 6A. The circle in the middle of FIG. 6A denotes the range of a standard distance, such as 10 meters, to the mower. In FIG. 6A, the line connected to the mower icon denotes the path travelled by the mower. To the left and the right of the interface in FIG. 6A are direction buttons. The user may trigger the direction buttons to control the movement of the mower.

When the terminal equipment determines that the distance between the mower and the boundary is less than a preset distance, or receives the boundary sent by the mower, prompt information may pop up prompting the user to select a movement direction. As shown in FIG. 6B, the prompt message may be "please select the direction of movement of the mower", or "please provide the direction of movement of the mower", and a voice prompt may also be played while the prompt message is being displayed, etc., which are all covered by the disclosure.

In addition, the prompt message may occupy the whole interface or part of the interface, which is not limited by the embodiment.

The user may input a direction selecting operation indicating a movement direction according to the prompt message. Specifically, the user may trigger the "move left" button in the interface as shown in FIG. 6B, generating a direction selecting operation of selection of the leftward direction along the boundary, or trigger the "move right" button in the interface, generating a direction selecting operation of selection of the rightward direction along the boundary.

Optionally, in another implementation of the embodiment, the direction determining instruction is specifically a location determining operation. Accordingly, S504 is implemented specifically as follows. A location adjusting operation or the location determining operation is received via the interface. If the location adjusting operation is received, the location adjusting operation is sent to the mower to have the mower adjust a direction of travel. The step of receiving the boundary of the target region sent by the mower is implemented again to update the boundary of the target region displayed to the user, as well as the relation of location of the boundary with the mower. If the location determining operation is received, the movement direction in which the mower is to move along the boundary of the target region is determined according to an angle between a current orientation of a head of the mower and the boundary of the target region.

Specifically, the embodiment allows the user to control continuous movement of the mower via the terminal equipment, and updates the current location of the mower in real time in the interface of the terminal equipment. When identifying a boundary in movement, the mower sends the boundary to the terminal equipment, such that the mower and the boundary as identified by the mower are displayed in the terminal equipment. An interface displaying a mower and a boundary as identified by the mower may also be as shown in FIG. 6A. The mower may be identified by a mower icon in the interface. An identified boundary may be plotted around the mower.

Differing from the above, when the terminal equipment determines that the distance between the mower and the boundary is less than a preset distance, or receives the boundary sent by the mower, prompt information may pop up prompting the user to select a movement direction. The user may input a location adjusting operation or a location determining operation via the interface according to the prompt information.

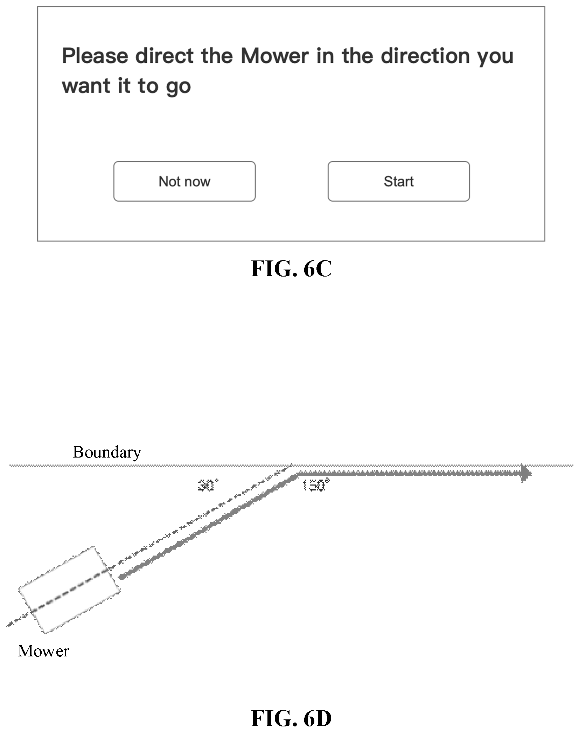

Exemplarily, FIG. 6C shows prompt information configured to prompt a user to determine a direction. The prompt information may specifically include "please direct the mower in the direction you want it to go". The user may trigger "not now" in the interface to return to the last interface, and input a location adjusting operation via a button in the last interface that is configured to control the direction of the mower, or trigger "start" in the interface to input a location determining operation.

Specifically, if the location adjusting operation has been received, the terminal equipment may send the location adjusting operation to the mower to have the mower adjust a direction of travel. If receiving the location adjusting operation, the mower adjusts the current orientation of the head of the mower according to the location adjusting operation, and sends the boundary of the target region as identified again, to allow updating the boundary of the target region displayed to the user, as well as the relation of location of the boundary with the mower.

In addition, if the user triggers "not now" and returns to the last interface, the interface may also include a trigger button configured for inputting the location determining operation. Having adjusted the direction of the mower, the user may trigger the button to input the location determining operation.

After the location determining operation has been input, the movement direction in which the mower is to move along the boundary of the target region may be determined according to an angle between a current orientation of a head of the mower and the boundary of the target region.

Specifically, in the embodiment, corresponding to an identified boundary, the angle between the leftward direction along the boundary and the current orientation of the head of the mower, as well as the angle between the rightward direction along the boundary and the current orientation of the head of the mower, may be computed. The direction corresponding to the less one of the two angles may be determined as the movement direction in which the mower is to move along the boundary of the target region, thereby decreasing the turning angle by which the mower turns, simplifying mapping.

FIG. 6D is a diagram of a principle of selecting a movement direction according to the disclosure. The rectangle in the figure denotes a mower. The line in the figure denotes a boundary identified by the mower. A straight line segment is given as an example in the figure. In actual use, an identified boundary may be a line segment of any shape.

In general, the mower collects an image via an image collecting equipment facing forward. Thus, an identified boundary is located in front of the mower. Therefore, the current orientation of the head of the mower in FIG. 6D is a direction facing the boundary. An extending line extending in the direction of travel of the mower intersects the boundary. The respective angles between the extending line and the line segments on either side of the intersection are computed, taking the intersection as the vertex. The angle shown in the figure may be 30° and 150°. The supplementary angle of the angle between the extending line and a line segment is the angle between the direction of travel and a direction of travel corresponding to the line segment. In the embodiment, the "rightward direction along the boundary" corresponding to the line segment with the angle 150° with the extending line is selected as the direction of travel for the mower to move along the boundary subsequently.

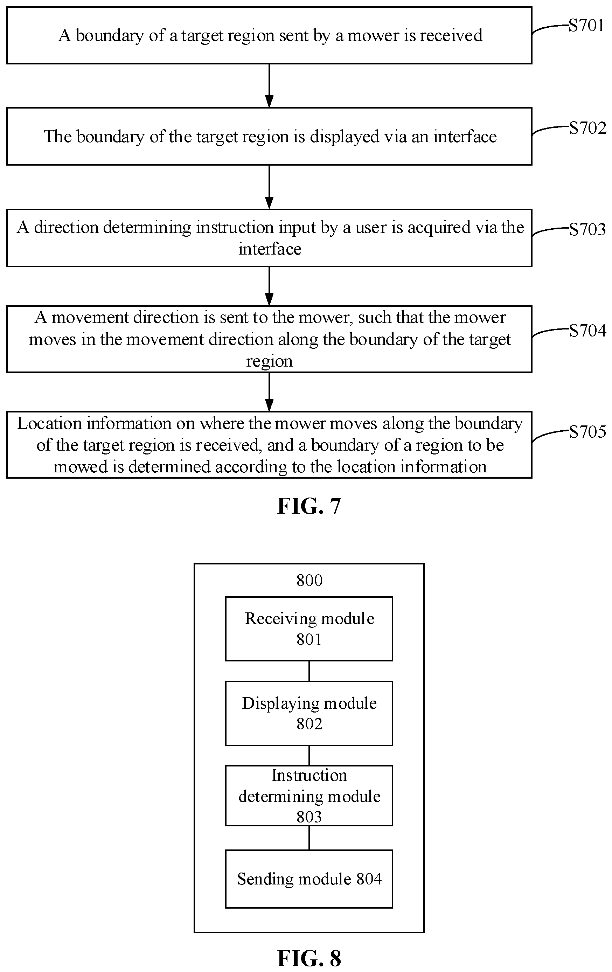

FIG. 7 is a flowchart of a mapping method. The mapping method includes steps as follows.

At S701, a boundary of a target region sent by a mower is received.

At S702, the boundary of the target region is displayed via an interface.

At S703, a direction determining instruction input by a user is acquired via the interface. The direction determining instruction indicates a movement direction in which the mower is to move along the boundary of the target region. The movement direction is a leftward direction along the boundary or a rightward direction along the boundary.

At S704, the movement direction is sent to the mower, such that the mower moves along the boundary of the target region in the movement direction.

In the embodiment, identification of a clear boundary may allow automatic movement of the mower along the boundary of the target region. If the boundary identified by the mower fails to meet a preset clarity requirement, the user may be prompted to control, via the interface, the mower to move along the boundary of the target region. That is, switch between automatic movement and remote-controlled movement may be implemented according to clarity of a boundary identified.

At S705, location information on where the mower moves along the boundary of the target region is received, and a boundary of a region to be mowed is determined according to the location information.

Refer to related art for a specific method for determining the boundary of the region to be mowed according to the location information, which is not repeated here.

Note that S701 to S704 in the embodiment may be replaced by any method embodiment as described for selecting a direction, and any such replacement is within the scope of the disclosure.

With the solution provided by the embodiment, the boundary of a target region is identified and sent during movement of a mower, such that the terminal equipment corresponding to the mower receives the boundary of the target region sent by the mower; displays the boundary of the target region via an interface; and acquires, via the interface, a direction determining instruction input by a user. The direction determining instruction indicates the movement direction in which the mower is to move along the boundary of the target region. The movement direction is the leftward direction along the boundary or the rightward direction along the boundary. The terminal equipment sends the movement direction to the mower, thereby allowing the user to control the mower to move along the boundary in the leftward direction along the boundary or the rightward direction along the boundary, and select, according to the learned location of the boundary relative to the mower, one of the two directions that facilitates mapping. A selected direction may facilitate movement of the mower, or be the direction in which there is fewer obstacles, etc., thereby improving mapping efficiency and quality.

FIG. 8 is a block diagram of architecture of a device for selecting a movement direction according to an exemplary embodiment of the disclosure. The device 800 for selecting a movement direction according to the embodiment mainly includes a receiving module, a displaying module, an instruction determining module, and a sending module.

The receiving module 801 is configured to receive a boundary of a target region sent by a mower.

The displaying module 802 is configured to display the boundary of the target region via an interface.

The instruction determining module 803 is configured to acquire, via the interface, a direction determining instruction input by a user. The direction determining instruction indicates a movement direction in which the mower is to move along the boundary of the target region. The movement direction is a leftward direction along the boundary or a rightward direction along the boundary.

The sending module 804 is configured to send the movement direction to the mower.

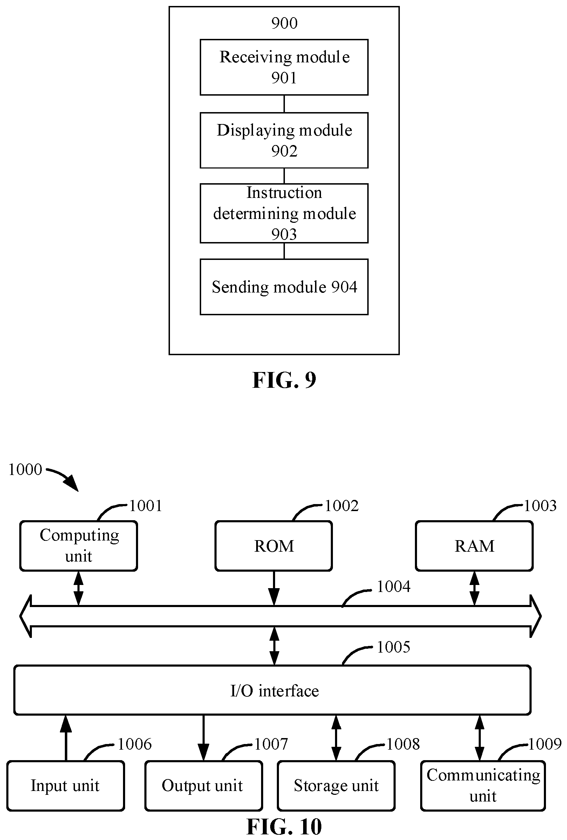

FIG. 9 is a block diagram of architecture of a mapping device according to an exemplary embodiment of the disclosure. The mapping device 900 according to the embodiment mainly includes a receiving module, a displaying module, an instruction determining module, and a sending module.

The receiving module 901 is configured to receive a boundary of a target region sent by a mower.

The displaying module 902 is configured to display the boundary of the target region via an interface.

The instruction determining module 903 is configured to acquire, via the interface, a direction determining instruction input by a user. The direction determining instruction indicates a movement direction in which the mower is to move along the boundary of the target region. The movement direction is a leftward direction along the boundary or a rightward direction along the boundary.

The sending module 904 is configured to send the movement direction to the mower, such that the mower moves along the boundary of the target region in the movement direction.

The receiving module 901 is configured to receive location information on where the mower moves along the boundary of the target region to determine a boundary of a region to be mowed according to the location information.

Another embodiment of the disclosure further provides a mower. The mower includes a controller. The controller is configured to, during movement of a mower, identify a boundary of a target region, and send the boundary of the target region as identified, to display the boundary of the target region to a user and acquire a direction determining instruction input by the user. The direction determining instruction indicates a movement direction in which the mower is to move along the boundary of the target region. The movement direction is a leftward direction along the boundary or a rightward direction along the boundary. The controller is configured to receive the movement direction.

Another embodiment of the disclosure further provides a terminal for controlling a mower. The terminal includes a communicating device and a displaying device. The communicating device is configured to receive a boundary of a target region sent by a mower, and send a movement direction to the mower. The displaying device is configured to display the boundary of the target region via an interface, and acquire, via the interface, a direction determining instruction input by a user. The direction determining instruction indicates the movement direction in which the mower is to move along the boundary of the target region. The movement direction is a leftward direction along the boundary or a rightward direction along the boundary.

Referring to FIG. 10, a block diagram of a structure of an electronic equipment 1000, which may serve as a server or a client of the disclosure, is described below. The electronic equipment is an example that may apply to the hardware equipment of respective aspects of the disclosure. The electronic equipment is to denote various forms of digital electronic computer equipment such as a laptop, a desktop computer, a workstation, a personal digital assistant, a server, a blade server, a mainframe computer, as well as any other suitable computer. The electronic equipment may also denote various forms of mobile devices such as personal digital processing, a cell phone, a smartphone, a wearable equipment, as well as any other similar computing device. Components, the connection and the relation among the components, and the functions of the components shown herein are given as mere examples, and are not intended to limit implementation of the disclosure herein described and/or required.

As shown in FIG. 10, the electronic equipment 1000 includes a computing unit 1001, which may perform various appropriate actions and processing according to a computer program stored in a read-only memory (ROM) 1002 or a computer program loaded from a storage unit 1008 to a random access memory (RAM) 1003. Various programs and data required for operation of the electronic equipment 1000 may further be stored in the RAM 1003. The computing unit 1001, the ROM 1002, and the RAM 1003 are connected to one another through a bus 1004. An Input / Output (I / O) interface 1006 is also connected to the bus 1004.

Multiple components in the electronic equipment 1000, including an input unit 1006, an output unit 1007, the storage unit 1008 and a communication unit 1009, may be connected to the I / O interface 1005. The input unit 1006 may be an equipment of any type capable of inputting information to the electronic equipment 1000. The input unit 1006 may receive digital or character information that is input, and produce a key signal input related to function control and/or user setting of the electronic equipment. The output unit 1007 may be an equipment of any type capable of presenting information, and may include, but is not limited to, a display, a loudspeaker, a video / audio output terminal, an oscillator, and/or a printer. The storage unit 1004 may include, but is not limited to, a magnetic disk or a CD. The communication unit 1009 may allow the electronic equipment 1000 to exchange information / data with another equipment via various telecommunications networks and/or a computer network such as the Internet, and may include, but is not limited to, a modem, a network card, an infrared communication equipment, a wireless communication transceiver and/or a chipset, such as a Bluetooth TM equipment, a WiFi equipment, a WiMax equipment, a cellular communication equipment and/or the like.

The computing unit 1001 may be various general and/or application-specific processing components capable of processing and computation. Some examples of the computing unit 1001 may include, but are not limited to, a central processing unit (CPU), a graphics processing unit (GPU), various application-specific artificial intelligence (AI) computing chips, various computing units running machine learning model algorithms, a digital signal processor (DSP), as well as any appropriate processor, controller, microcontroller, etc. The computing unit 1001 may implement respective processing and methods described above. For example, in some embodiments, a mower calibrating method as described may be implemented as a computer software program, which is tangibly included in a machine-readable medium such as the storage unit 1008. In some embodiments, part or all of the computer program may be loaded and/or installed onto the electronic equipment via the ROM 1002 and/or the communication unit 1009. In some embodiments, the computing unit 1001 may be configured to implement the mower calibrating method as described by any other appropriate mode (such as with the help of a firmware).

### Additional examples

In a first example, it is provided a method for selecting a direction, which includes:
identifying a boundary of a target region via a mower; and
in response to determining according to the boundary as identified that a distance between the mower and the boundary is within a first preset range, controlling the mower to move in a movement direction along the boundary, the movement direction being either a leftward direction along the boundary or a rightward direction along the boundary, which direction has a less angle with respect to an orientation of a head of the mower.

In a second example, the method according to first example, wherein the boundary is an external entity boundary or an internal entity boundary, wherein a value of the first preset range corresponding to the external entity boundary differs from a value of the first preset range corresponding to the internal entity boundary.

In a third example, the method according to second example, wherein controlling the mower to move in the movement direction along the boundary in response to determining according to the boundary as identified that the distance between the mower and the boundary is within the first preset range includes:
in response to determining according to the boundary as identified that the distance between the mower and the boundary is within the first preset range, sending the boundary as identified to display the boundary of the target region to a user, and receiving a location adjusting operation via an interface; and
in response to the location adjusting operation, adjusting, via the mower, the orientation of the head of the mower.

In a fourth example, the method according to second example, wherein controlling the mower to move in the movement direction along the boundary in response to determining according to the boundary as identified that the distance between the mower and the boundary is within the first preset range includes:
in response to determining according to the boundary as identified that the distance between the mower and the boundary is within the first preset range, sending the boundary as identified to display the boundary of the target region to a user, and receiving a location determining operation via an interface; and
in response to the location determining operation, determining, via the mower, the leftward direction along the boundary or the rightward direction along the boundary, which direction has a less angle with respect to a current orientation of the head of the mower, as the movement direction, and controlling the mower to move in the movement direction along the boundary.

In a fifth example, the method according to any one of first to fourth examples, wherein moving in the leftward direction along the boundary is advancing based on the orientation of the head of the mower, and when the boundary is reached, turning left and continuing to move along the boundary, and moving in the rightward direction along the boundary is advancing based on the orientation of the head of the mower, and when the boundary is reached, turning right and continuing to move along the boundary.

In a sixth example, it is provided a mower, which includes:
a body 301;
a movement component 302 provided on the body 301;
a boundary identifying component 303 provided on the body 301, configured to identify a boundary of a target region; and
a positioning component 304 provided on the body 301, configured to sense pose data of the mower to determine an orientation of a head of the mower according to the pose data,
the mower further includes:
   a controlling component 305 provided on the body, configured to, in response to determining according to the boundary as identified that a distance between the mower and the boundary is within a first preset range, control the mower to move in a movement direction, the movement direction being either a leftward direction along the boundary or a rightward direction along the boundary, which direction has a less angle with respect to the orientation of the head of the mower.

In a seventh example, the mower according to sixth example, wherein the boundary is an external entity boundary or an internal entity boundary, wherein a value of the first preset range corresponding to the external entity boundary differs from a value of the first preset range corresponding to the internal entity boundary.

In an eighth example, the mower according to seventh example, wherein the controlling component 305 is configured to:
in response to determining according to the boundary as identified that the distance between the mower and the boundary is within the first preset range, send the boundary as identified to display the boundary of the target region to a user, and receive a location adjusting operation via an interface; and
in response to the location adjusting operation, adjust the orientation of the head of the mower.

In a ninth example, the mower according to seventh example, wherein the controlling component 305 is configured to:
in response to determining according to the boundary as identified that the distance between the mower and the boundary is within the first preset range, send the boundary as identified to display the boundary of the target region to a user, and receive a location determining operation via an interface; and
in response to the location determining operation, determine the leftward direction along the boundary or the rightward direction along the boundary, which direction has a less angle with respect to a current orientation of the head of the mower, as the movement direction, and control the mower to move in the movement direction along the boundary.

In a tenth example, the mower according to any one of sixth to ninth examples, wherein moving in the leftward direction along the boundary is advancing based on the orientation of the head of the mower, and when the boundary is reached, turning left and continuing to move along the boundary, and moving in the rightward direction along the boundary is advancing based on the orientation of the head of the mower, and when the boundary is reached, turning right and continuing to move along the boundary.

In an eleventh example, it is provided an electronic equipment, which includes a processor and a memory storing a program,
wherein the program includes instructions which, when executed by the processor, cause the processor to implement the method according to any one of first to fifth examples.

In a twelfth example, it is provided a non-transitory computer-readable storage medium storing thereon computer instructions configured to cause a computer to implement the method according to any one of first to fifth examples.

A program code configured to implement a method of the disclosure may be written in any combination of one or more programming languages. The program code may be provided to a controller or a processor of a general-purpose computer, an application-specific computer, or another programmable data processing device, such that a function / operation specified in a flowchart and/or block diagram is implemented when the program code is executed by the processor or the controller. The program code may be executed completely on a machine. The program code may be executed partly on a machine. The program code may be executed partly on a machine and partly on a remote machine as a separate software package. The program code may be executed completely on a remote machine or a server.

In context of the disclosure, a machine-readable medium may be a tangible medium, which may include or store a program for being used by, or together with, an instruction implementing system, device, or equipment. A machine-readable medium may be a machine-readable signal medium or a machine-readable storage medium. A machine-readable medium may include, but is not limited to, an electronic, magnetic, optical, electromagnetic, infrared, or semiconductor system, device, or equipment, or any appropriate combination of the any listed item. A more specific example of a machine-readable storage medium may include an electrical connection based on one or more cables, a portable computer disk, a hard disk, a random access memory (RAM), a read-only memory (ROM), an erasable programmable read-only memory (EPROM, or flash memory), an optical fiber, a portable compact disc read-only memory (CD-ROM), an optical storage equipment, a magnetic storage equipment, or any appropriate combination of the any listed item.

The phrases "machine-readable medium" and "computer readable medium" as used in the disclosure may refer to any computer program product, equipment, and/or device, such as a magnetic disk, a CD, a memory, a programmable logic device (PLD), etc., configured to provide a machine instruction and/or data to a programmable processor, including a machine-readable medium that receives a machine instruction as a machine-readable signal. The phrase "machine-readable signal" may refer to any signal configured to provide a machine instruction and/or data to a programmable processor.

A system and technology described here may be implemented on a computer to provide interaction with a user. The computer may be provided with: a display device configured to display information to a user, such as a cathode ray tube (CRT) or a liquid crystal display (LCD) monitor; a keyboard; and a pointer device such as a mouse or a trackball. A user may provide input to the computer via the keyboard and the pointer device. A device of another kind may also be configured to provide interaction with a user. For example, a feedback provided to a user may be a sensor feedback of any form, such as a visual feedback, an auditory feedback, or a haptic feedback. Input from a user may be received in any form, including sound input, voice input, or haptic input.

A system and technology described here may be implemented in a computing system including a background component (e.g., as a data server), or a computing system including a middleware component (e.g., as an application server), or a computing system including a front-end component (such as a user computer having a graphical user interface, GUI, or a network browser, where a user may interact with a system and technology implementation described here via the GUI or the network browser), or a computing system including any combination of the background component, the middleware component, or the front-end component. Components of the system may be interconnected via digital data communication of any form or medium, such as a communication network. An example of a communication network may include a local area network (WLAN), a wide area network (WAN), as well as the Internet.

A computer system may include a client and a server. A client and a server in general are away from each other and generally interact with each other via a communication network. A client-server relation may be produced by running a client computer program and a corresponding server computer program respectively on corresponding computers.

Note that according to implement as needed, a component / step described in embodiments of the disclosure may be divided into multiple components / steps, and two or more components / steps (or some operations of the components / steps) may be combined into a new component / step, to achieve a goal of an embodiment of the disclosure.

A person having ordinary skill in the art may realize that a combination of an illustrative unit as well as an illustrative method step according to embodiments of the disclosure may be implemented by electronic hardware or a combination of electronic hardware and computer software. Whether such a function is implemented by hardware or by software may depend on a specific application of a technical solution as well as a design constraint. Depending on a specific application, a person having ordinary skill in the art may implement a described function using different methods. Such implementation however should not be deemed going beyond the scope of embodiments of the disclosure.

The above implementation is for illustrating embodiments of the disclosure, rather than limiting the embodiments of the disclosure. A person having ordinary skill in the art may make various modifications and variations to the disclosure without departing from the spirit and principle of embodiments of the disclosure. Therefore, any equivalent technical solution also belongs to the scope of embodiments of the disclosure. The scope of the disclosure should be defined by the claims.

## Claims

1. A method for selecting a direction, **characterized by** comprising:
identifying (S101), by a mower, a boundary of a target region; and
in response to determining according to the boundary as identified that a distance between the mower and the boundary is within a first preset range, sending, by the mower, the boundary as identified to a terminal equipment of a user, to display the boundary of the target region to the user, and receiving, by the mower, a location adjusting operation inputted by the user via a button in a last interface of the terminal equipment;
in response to the location adjusting operation, adjusting, by the mower, an orientation of a head of the mower; and
based on the adjusted orientation of the head of the mower, controlling (S102), by a controlling component of the mower, the mower to move in a movement direction along the boundary, the movement direction being either a leftward direction along the boundary or a rightward direction along the boundary, which direction has a less angle with respect to the adjusted orientation of the head of the mower.

2. The method of claim 1, wherein the boundary is an external entity boundary or an internal entity boundary, wherein a value of the first preset range corresponding to the external entity boundary differs from a value of the first preset range corresponding to the internal entity boundary.

3. The method of claim 1 or 2, wherein moving in the leftward direction along the boundary is advancing based on the orientation of the head of the mower, and when the boundary is reached, turning left and continuing to move along the boundary, and moving in the rightward direction along the boundary is advancing based on the orientation of the head of the mower, and when the boundary is reached, turning right and continuing to move along the boundary.

4. The method of claim 1, wherein identifying (S101), by the mower, the boundary of the target region comprises:
collecting, by the mower, an image around the mower; and
performing, by the mower, boundary identification on the collected image to acquire a location of the boundary of the target region relative to the mower.

5. The method of claim 2, wherein the value of the first preset range corresponding to the external entity boundary is greater than the value of the first preset range corresponding to the internal entity boundary.

6. A mower, comprising:
a body (301);
a movement component (302) provided on the body (301);
a boundary identifying component (303) provided on the body (301), configured to identify a boundary of a target region; and
a positioning component (304) provided on the body (301), configured to sense pose data of the mower to determine an orientation of a head of the mower according to the pose data,
**characterized in that**, the mower further comprises:
a controlling component (305) provided on the body, configured to: in response to determining according to the boundary as identified that a distance between the mower and the boundary is within a first preset range, send the boundary as identified to a terminal equipment of a user, to display the boundary of the target region to the user, and receive a location adjusting operation inputted by the user via a button in a last interface of the terminal equipment; in response to the location adjusting operation, adjust an orientation of a head of the mower; and based on the adjusted orientation of the head of the mower, control the mower to move in a movement direction along the boundary, the movement direction being either a leftward direction along the boundary or a rightward direction along the boundary, which direction has a less angle with respect to the adjusted orientation of the head of the mower.

7. The mower of claim 6, wherein the boundary is an external entity boundary or an internal entity boundary, wherein a value of the first preset range corresponding to the external entity boundary differs from a value of the first preset range corresponding to the internal entity boundary.

8. The mower of claim 6 or 7, wherein moving in the leftward direction along the boundary is advancing based on the orientation of the head of the mower, and when the boundary is reached, turning left and continuing to move along the boundary, and moving in the rightward direction along the boundary is advancing based on the orientation of the head of the mower, and when the boundary is reached, turning right and continuing to move along the boundary.

9. The mower of claim 6, wherein the mower further comprises:
an image collecting device, configured to collect an image around the mower; and
wherein the boundary identifying component (303) is further configured to: perform boundary identification on the collected image to acquire a location of the boundary of the target region relative to the mower.

10. The mower of claim 7, wherein the value of the first preset range corresponding to the external entity boundary is greater than the value of the first preset range corresponding to the internal entity boundary.

11. A non-transitory computer-readable storage medium storing thereon computer instructions configured to cause a computer to implement the method of any one of claims 1 to 5.
